# EUROPEAN PATENT SPECIFICATION

(11) **EP 1 592 565 B1**
(45) Date of publication and mention of the grant of the patent: **19.04.2006**
(21) Application number: 04742102.9
(22) Date of filing: 10.06.2004
(51) Int. Cl.: B42D 15/10

(54) **METHOD FOR PRODUCING DATA SHEET, AND DATA SHEET**
VERFAHREN ZUR HERSTELLUNG EINES DATENBLATTS UND DATENBLATT
CREATION D'UNE FEUILLE DE DONNEES, ET FEUILLE DE DONNEES

(30) Priority: 16.06.2003 FI 20030903
(43) Date of publication of application: 09.11.2005
(73) Proprietor: Setec Oy, 01740 Vantaa (FI)
(72) Inventor: HOLMBERG, Mika, FI-00100 Helsinki (FI); KORHONEN, Maila, FI-01600 Vantaa (FI); HERLIN, Jari, FI-00650 Helsinki (FI); SYRJÄNEN, Taru, 01400 Vantaa (FI)
(74) Representative: Holmström, Stefan Mikael
(86) International application number: PCT/FI2004/000359
(87) International publication number: WO 2004/110780

(56) References cited:
- EP-A1- 0 917 966
- EP-A1- 1 008 459
- EP-A2- 1 245 407
- WO-A1-98/19870
- GB-A- 2 082 505
- GB-A- 2 352 680

## Description

### FIELD OF THE INVENTION

The present invention relates to producing a flexible data sheet in a security document, such as a passport. In the following the invention will be explained primarily with reference to a passport, although the invention may also be utilized in other security documents, in which a flexible data sheet is required.

### DESCRIPTION OF THE PRIOR ART

The properties required of a flexible data sheet are partly contradictory. First of all, the data area of a data portion on a data sheet, in which the data included on the data sheet is recorded, should be of such a structure that a counterfeiter is unable to disassemble it. Different solutions based on bonding different layers to one another by gluing in the data area, in which the data included on the data sheet is recorded, are disadvantageous in the sense that the adhesive layer may offer a counterfeiter a chance to disassemble the data sheet at the most critical area thereof regarding security. It has been proven in practice that a uniform data portion made of plastic material by means of lamination is an excellent alternative in respect of security, as it cannot be disassembled without leaving any visible traces.

However, in practice a data sheet produced by laminating plastic material has to be made of such a material, whose flexing properties and bending strength are poor. Thus, a need is created to provide the data sheet with a flexible and bending resistant attachment portion, by means of which the data sheet is attached to the security document. In order to achieve an adequate security level the data portion on the data sheet should be attached to the attachment portion in such a manner that these two cannot be detached from one another without leaving any visible traces.

A solution is previously know from EP-A1-1 008 459 in which the data portion produced by laminating plastic material to form a uniform part is attached to the attachment portion utilizing a strip provided with projections. Then, apertures are first made through the attachment portion. After this, the perforated area of the attachment portion is placed against the data portion. The strip made of plastic material is placed over the attachment portion so that the projections thereof are inserted through the apertures of the attachment portion to the surface of the data portion. Finally the projections are attached to the surface of the data portion using an adhesive agent or by laminating them together.

However, the above prior art solution is associated with such a problem that the bond between the attachment portion and the data portion is totally dependent on the durability of the strip made of plastic material. It is possible that a counterfeiter is able to break such a plastic strip without leaving any significantly visible traces. Consequently, a counterfeiter may be able to detach the data portion on the data sheet from the security document without leaving any traces, which is not acceptable regarding security.

### BRIEF DESCRIPTION OF THE INVENTION

It is an object of the present invention to solve the problem described above and to provide a flexible data sheet of a security document that is safer than the previous ones in respect of counterfeit attempts. This object is achieved with a method according to the accompanying independent claim 1 and a data sheet according to the accompanying independent claim 5.

The invention is based on the idea that when a data portion on a data sheet is made of plastic material to form a uniform part, from the end of which an attachment portion protrudes into the plastic material of the data portion, and as the attachment portion is attached to the data portion by means of the protruding portion, then a solution is achieved, in which the attachment portion cannot be detached from the data portion without leaving any visible traces in the plastic material of the data portion. In addition, since the portion protruding into the data portion of the attachment portion is dimensioned such that it barely extends at all or extends only slightly to the data area of the data portion, in which the data of the data sheet is recorded, the risk of providing the data area with such a layer structure that would enable to disassemble the data sheet in the data area is avoided.

The preferred embodiments of the method and data sheet of the invention are disclosed in the accompanying dependent claims 2 to 4 and 6 to 7.

### BRIEF DESCRIPTION OF THE DRAWINGS

In the following the invention will be explained in greater detail by way of example with reference to the accompanying drawings, in which:
Figure 1 shows a data sheet associated with a security document,
Figures 2 and 3 illustrate a first preferred embodiment of the invention,
Figure 4 illustrates a second preferred embodiment of the invention, and
Figures 5 and 6 illustrate a third preferred embodiment of the invention.

### DESCRIPTION OF THE PREFERRED EMBODIMENTS

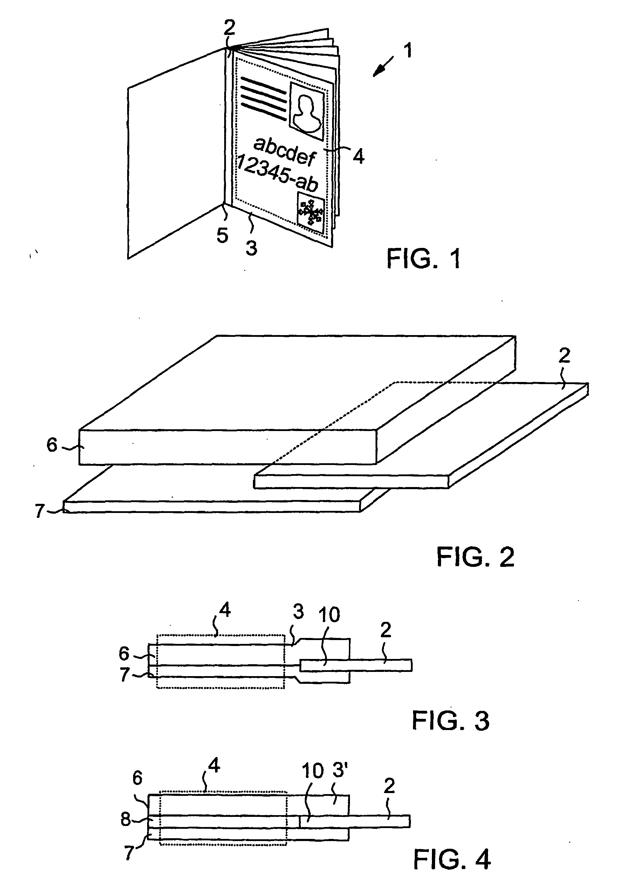

Figure 1 shows a data sheet 1 according to the invention attached to a security document. In the example shown in Figure 1 the security document refers to a passport, to which the data sheet 1 has been attached by means of an attachment portion 2. The data sheet 1 can be attached to the security document for instance with a stitch 5, i.e. like the other sheets included in the security document.

Data such as the name, time of birth and photograph of the passport holder etc. is included in a data area 4 of a data portion 3 on the data sheet.

Figures 2 and 3 illustrate a first preferred embodiment of the invention. Figure 2 shows a method, by which the data sheet is produced and Figure 3 shows the structure of a completed data sheet.

In the embodiment shown in Figure 2 the data portion on the data sheet is produced by making at least two sheets 6 and 7 to be laminated overlap, whereof at least one is applicable for laser inscription. The sheets 6 and 7 can be made of for instance bright polycarbonate (PC). In order to enable laser inscription at least one of the layers may be of bright carbonized polycarbonate.

The attachment portion 2 is made of flexible and bending resistant material. An alternative is to employ a layer-structured attachment portion, the surface layers of which are made of polyethylene (PE) and the middle layer thereof is made of polyester (PET). To produce the data sheet, the attachment portion 2 made of flexible and bending resistant material is placed between the overlapping sheets 6 and 7 to be laminated to partly separate the sheets 6 and 7 from one another. After this, the sheets 6 and 7 are laminated together at a higher temperature, whereby the end result is the data sheet shown in Figure 3. When the attachment portion is structured in layers as explained above, the polyethylene on the surfaces of the attachment portion forms adhesive layers, which bond the attachment portion in position during the lamination taking place at a higher temperature. No further adhesive layers are then required.

The data sheet can be produced either in such a manner that the sheets 2, 6 and 7 are cut precisely in the correct shape thereof and are placed accurately at predetermined positions in relation to one another before lamination. Alternatively, the preparation can be carried out so that larger sheets are laminated together, in which case the preparation method includes a cutting stage after lamination for cutting off the unnecessary parts of the sheets.

It should be noted when studying Figure 2 as well as the other Figures that for the sake of clarity the dimensions of the layers deviate from the actual dimensions. The total thickness of the data sheet ranges for instance between 0.8 and 0.9 mm and the thickness of the attachment portion on the data sheet may for instance range from 0.1 to 0.2 mm.

The data sheet shown in Figure 3 is produced as described in Figure 2. The data sheet thus includes a data portion 3 made of uniform plastic material. The sheets 6 and 7 are laminated so tightly together that they practically form a uniform part, whereby a counterfeiter is unable to separate the sheets used to produce the data sheet from one another without leaving any traces. The attachment portion 2 is attached to the data portion by means of a portion 10 protruding into the plastic material of the data portion 3. However, the portion protruding into the data portion 3 of the attachment portion 2 does not extend in this example to the data area 4 of the data portion, in which the data included on the data sheet is recorded. Thus, the formation of such a layer structure is avoided in the data area 4 that could allow a counterfeiter to break the data sheet in pieces in the most critical area thereof, i.e. in the data area 4.

In accordance with the invention, the attachment portion 2 can be attached to the data portion using an adhesive agent. This may be carried out for instance so that the surfaces of the portion 10 inserted between the sheets 6 and 7 of the attachment portion 2 are provided with layers of adhesive agent before placing the flexible and bending resistant sheet forming the attachment portion 2 in position between the sheets 6 and 7 to be laminated. Employing an adhesive agent that is activated at a higher temperature the attachment portion 2 can be bonded in position during the laminating stage when the temperature is raised. Alternatively another type of adhesive agent can be employed that does not require a higher temperature during the bonding stage.

Figure 4 illustrates the second preferred embodiment of the invention. The embodiment shown in Figure 4 corresponds to a great extent with the embodiment described in Figures 2 and 3. Therefore the embodiment shown in Figure 4 is explained in the following primarily by pointing out the dif ferences in the embodiment shown in Figure 4 in comparison with the previous embodiments.

In the embodiment shown in Figure 4 the data portion 3' on the data sheet is provided with a filling layer 8 to be laminated. The thickness of this layer corresponds with the thickness of the attachment portion 2 and it is arranged as an extension of the attachment portion 2 between the sheets 6 and 7 to separate the sheets 6 and 7 from one another before lamination. The filling layer may be made of the same material as the sheets 6 and 7.

During lamination the filling layer 8 as well as the sheets 6 and 7 are thus laminated together and form a data portion 3' made of uniform plastic material. The filling layer provides such an advantage that no corresponding discontinuity point is formed on the outer surfaces of the data portion 3', or threshold, which is formed in the embodiment shown in Figure 3 at the position where the attachment portion 2 inserted into the data portion ends. In the embodiment shown in Figure 4 the outer surfaces of the data portion 3' on the data sheet thus become smoother.

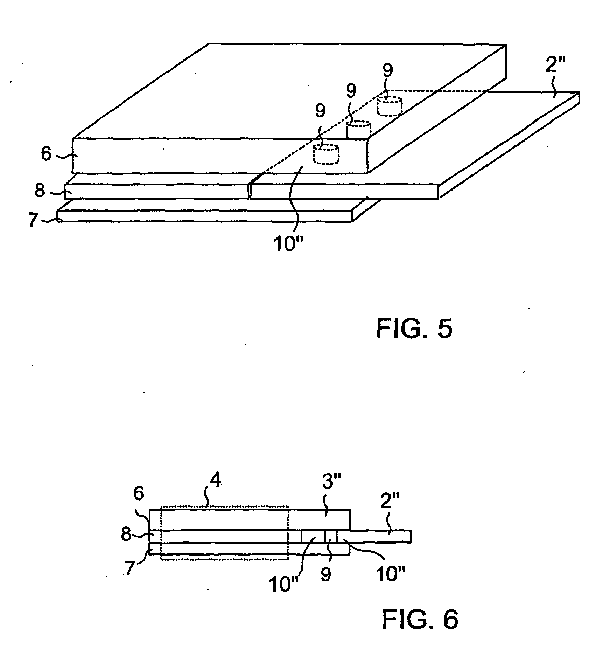

Figures 5 and 6 illustrate a third preferred embodiment of the invention. In Figure 6 the data sheet is shown partly in cross-section at an aperture 9. The embodiment shown in Figures 5 and 6 corresponds to a great extent with the embodiment described in Figures 2 and 3. Thus, the embodiment shown in Figures 5 and 6 is explained in the following primarily by pointing out the differences of the embodiment shown in Figures 5 and 6 in comparison with the previous embodiments.

It can be noted in Figures 5 and 6 that apertures 9 extending through the attachment portion 2" are formed in the flexible and bending resistant attachment portion 2" in the portion 10" protruding into the data portion. When the sheets 6 and 7 as well as the filling layer 8 are laminated together, the sheets 6 and 7 are also laminated together at the apertures 9. The lamination taking place at the apertures 9 attaches the portion 10" protruding into the data portion 3" of the attachment portion 2" and at the same time the entire attachment portion 2" to the data portion.

Dimensioning the apertures 9 appropriately allows fastening the attachment portion 2" and the data portion 3" with one another only by means of the lamination taking place through the apertures 9. Alternatively the fastening can be further improved with an adhesive agent, in which case the portion 10" inserted into the data portion 3" can also be provided with adhesive layers on the surfaces that come in contact with the data portion 3".

It is to be understood that the above description and the figures associated therewith are merely intended to illustrate the present invention. Different variations and modifications of the invention will be apparent for those skilled in the art without deviating from the scope of the invention shown in the accompanying claims.

## Claims

1. A method for producing a data sheet (1) in a security document, the data sheet including at least a data portion (3, 3', 3") and an attachment portion (2, 2"), the method comprising:
producing the data portion (3, 3', 3") with a data area (4) by making at least two sheets (6, 7) to be laminated overlap one another, whereof at least one is applicable for laser inscription, and the overlapping sheets to be laminated are laminated together in order to achieve a uniform data portion, wherein producing the attachment portion comprises:
placing a flexible and bending resistant sheet (2, 2") before lamination between the overlapping sheets (6, 7) to be laminated to separate a portion of the two sheets to be laminated from one another, and
carrying out the lamination by laminating said at least two overlapping sheets (6, 7) to each other in order to obtain the uniform data portion at said data area (4) and to attach said flexible and bending resistant sheet (2, 2") to said uniform data portion.

2. A method as claimed in claim 1, **characterized in that** the portion separating the sheets (6, 7) to be laminated of the flexible and bending resistant sheet (2, 2") is also bonded to the sheets to be laminated.

3. A method as claimed in claim 1 or 2, **characterized in that** the method further comprises:
forming apertures (9) through the flexible and bending resistant sheet,
placing the flexible and bending resistant sheet between the overlapping sheets (6, 7) to be laminated to separate a portion of the two sheets to be laminated from one another so that the apertures (9) are located between the two sheets to be laminated, and
carrying out the lamination, whereby the sheets (6, 7) to be laminated on opposite sides of the flexible and bending resistant sheet are laminated together also through the apertures (9), thus fastening the flexible and bending resistant sheet in position.

4. A method as claimed in claims 1 to 3, **characterized by**
placing a filler sheet (8) to be laminated between the overlapping sheets (6, 7) to be laminated before lamination as an extension of the flexible and bending resistant sheet (2, 2") between the overlapping sheets to be laminated to separate these from one another, and
laminating the overlapping sheets (6, 7) to be laminated and the filler sheet (8) together in order to form the data portion.

5. A data sheet (1) in a security document comprising
a data portion (3, 3', 3") including a data area (4) in which at least some of the data on the data sheet (1) can be recorded utilizing laser inscription technique, and
a flexible and bending resistant attachment portion (2, 2") in order to attach the data sheet (1) to the security document, wherein
the data portion (3, 3', 3") is formed of a uniform part made of plastic material with a data area (4), said uniform part including at least two sheets that are laminated to each other at said data area, the attachment portion (2, 2') protruding into the plastic material between said at least two sheets of the data portion from an end of said uniform part,
the attachment portion (2, 2') is attached to the data portion (3, 3', 3") by means of a portion (10, 10") protruding into the plastic material of the data portion, and
the portion (10) protruding into the data portion (3, 3', 3") of the attachment portion (2, 2") does not extend at all or extends only partly to the data area (4) of the data portion in which the data included on the data sheet is recorded.

6. A data sheet as claimed in claim 5, **characterized in that** the portion (10) protruding into the data portion (3, 3') of the attachment portion (2) is attached to the plastic material of the data portion with an adhesive agent.

7. A data sheet as claimed in claim 5 or 6, **characterized in that**
apertures (9) extend through the portion protruding into the data portion (3") of the attachment portion (2"), and
the plastic material of the data portion (3") is protruding through the apertures (9) in order to fasten the attachment portion (2") to the data portion (3").

## Revendications

1. Procédé pour produire une feuille de données (1) dans un document de sécurité, la feuille de données comportant au moins une partie de données (3, 3', 3") et une partie de fixation (2, 2"), le procédé comportant l'étape consistant à :
produire la partie de données (3, 3', 3") avec une zone de données (4) en faisant en sorte qu'au moins deux feuilles (6, 7) devant être stratifiées soient en chevauchement l'une sur l'autre, dont au moins une est appropriée pour une inscription à laser, et les feuilles en chevauchement devant être stratifiées sont stratifiées ensemble pour obtenir une partie de données uniforme, la production de la partie de fixation comportant les étapes consistant à :
placer une feuille souple et résistant à une incurvation (2, 2") avant stratification entre les feuilles de chevauchement (6, 7) devant être stratifiées pour séparer une partie des deux feuilles devant être stratifiées l'une par rapport à l'autre, et
effectuer la stratification en stratifiant lesdites au moins deux feuilles en chevauchement (6, 7) l'une sur l'autre pour obtenir la partie de données uniforme au niveau de ladite zone de données (4), et pour fixer ladite feuille souple et résistant à une incurvation (2, 2") sur ladite partie de données uniforme.

2. Procédé selon la revendication 1, **caractérisé en ce que** la partie séparant les feuilles (6, 7) devant être stratifiées de la feuille souple et résistant à une incurvation (2, 2") est également fixée sur les feuilles devant être stratifiées.

3. Procédé selon la revendication 1 ou 2, **caractérisé en ce que** le procédé comporte en outre les étapes consistant à :
former des ouvertures (9) à travers la feuille souple et résistant à une incurvation,
placer la feuille souple et résistant à une incurvation entre les feuilles en chevauchement (6, 7) devant être stratifiées pour séparer une partie des deux feuilles devant être stratifiées l'une de l'autre, de sorte que les ouvertures (9) sont positionnées entre les deux feuilles devant être stratifiées, et
effectuer la stratification, de sorte que les feuilles (6, 7) devant être stratifiées sur des côtés opposés de la feuille souple et résistant à une incurvation sont stratifiées ensemble également à travers les ouvertures (9), en fixant ainsi la feuille souple et résistant à une incurvation en position.

4. Procédé selon l'une quelconque des revendications 1 à 3, **caractérisé en ce qu'**il comporte les étapes consistant à :
placer une feuille de remplissage (8) devant être stratifiée entre les feuilles en chevauchement (6, 7) devant être stratifiées avant stratification sous la forme d'un prolongement de la feuille souple et résistant à une incurvation (2, 2") entre les feuilles en chevauchement devant être stratifiées, pour séparer celles-ci l'une de l'autre, et
stratifier les feuilles en chevauchement (6, 7) devant être stratifiées et la feuille de remplissage (8) ensemble pour former la partie de données.

5. Feuille de données (1) dans un document de sécurité, comportant :
une partie de données (3, 3', 3") incluant une zone de données (4) dans laquelle au moins certaines des données sur la feuille de données (1) peuvent être enregistrées en utilisant une technique d'inscription à laser, et
une partie de fixation souple et résistant à une incurvation (2, 2") pour fixer la feuille de données (1) sur le document de sécurité, dans laquelle
la partie de données (3, 3', 3") est constituée d'une partie uniforme réalisée en matière plastique avec une zone de données (4), ladite partie uniforme incluant au moins deux feuilles qui sont stratifiées l'une sur l'autre au niveau de ladite zone de données, la partie de fixation (2, 2') faisant saillie dans la matière plastique entre lesdites au moins deux feuilles de la partie de données à partir d'une extrémité de ladite partie uniforme,
la partie de fixation (2, 2') est fixée sur la partie de données (3, 3', 3") par l'intermédiaire d'une partie (10, 10") faisant saillie dans la matière plastique de la partie de données, et
la partie (10) faisant saillie dans la partie de données (3, 3', 3") de la partie de fixation (2, 2") ne s'étend pas du tout ou s'étend uniquement partiellement vers la zone de données (4) de la partie de données dans laquelle les données incluses sur la feuille de données sont enregistrées.

6. Feuille de données selon la revendication 5, **caractérisée en ce que** la partie (10) faisant saillie dans la partie de données (3, 3') de la partie de fixation (2) est fixée sur la matière plastique de la partie de données à l'aide d'un agent adhésif.

7. Feuille de données selon la revendication 5 ou 6, **caractérisée en ce que**
des ouvertures (9) s'étendent à travers la partie faisant saillie dans la partie de données (3") de la partie de fixation (2"), et
la matière plastique de la partie de données (3") fait saillie à travers les ouvertures (9) pour fixer la partie de fixation (2") sur la partie de données (3").

## Patentansprüche

1. Verfahren zum Herstellen eines Datenblatts (1) in einem Sicherheitsdokument, wobei das Datenblatt mindestens einen Datenabschnitt (3, 3', 3") und einen Befestigungsabschnitt (2, 2") aufweist, wobei das Verfahren die Schritte aufweist:
Erzeugen des Datenabschnitts (3, 3', 3'') mit einem Datenbereich (4) durch Veranlassen, dass mindestens zwei aneinander zu laminierende Blätter (6, 7) sich überlappen, von denen mindestens eines für eine Laserbeschriftung geeignet ist, und wobei die zu laminierenden überlappenden Blätter aneinander laminiert werden, um einen gleichmäßigen Datenabschnitt zu erhalten;
wobei der Schritt zum Erzeugen des Befestigungsabschnitts aufweist:
Anordnen eines flexiblen und biegesteifen Lagenmaterials (2, 2'') vor dem Laminieren zwischen den zu laminierenden überlappenden Blättern (6, 7), um einen Abschnitt der beiden zu laminierenden Blätter voneinander zu trennen; und
Laminieren der mindestens zwei überlappenden Blätter (6, 7) aneinander, um den gleichmäßigen Datenabschnitt am Datenbereich (4) zu erhalten, und um das flexiblen und biegesteife Lagenmaterial (2, 2'') am gleichmäßigen Datenabschnitt zu befestigen.

2. Verfahren nach Anspruch 1, **dadurch gekennzeichnet, dass** der die zu laminierenden Blätter (6, 7) trennende Abschnitt des flexiblen und biegesteifen Lagenmaterials (2, 2'') auch mit den zu laminierenden Blättern verbunden wird.

3. Verfahren nach Anspruch 1 oder 2, **dadurch gekennzeichnet, dass** das Verfahren ferner die Schritte aufweist:
Ausbilden von Öffnungen (9) durch das flexible und biegesteife Lagenmaterial;
Anordnen des flexiblen und biegesteifen Lagenmaterials zwischen den zu laminierenden überlappenden Blättern (6, 7), um einen Abschnitt der beiden zu laminierenden Blätter voneinander zu trennen, so dass die Öffnungen (9) zwischen den beiden zu laminierenden Blättern angeordnet sind; und
Ausführen eines Laminierungsschritts, wodurch die zu laminierenden Blätter (6, 7) an entgegengesetzten Seiten des flexiblen und biegesteifen Lagenmaterials auch durch die Öffnungen (9) aneinander laminiert werden, wodurch das flexible und biegesteife Lagenmaterial in Position fixiert wird.

4. Verfahren nach einem der Ansprüche 1 bis 3, **gekennzeichnet durch** die Schritte:
Anordnen eines zu laminierenden Füllblattes (8) als Erweiterung des flexiblen und biegesteifen Lagenmaterials (2, 2'') zwischen den zu laminierenden überlappenden Blättern (6, 7) vor dem Laminierungsschritt, um die zu laminierenden überlappenden Blätter voneinander zu trennen; und
Laminieren der zu laminierenden überlappenden Blätter (6, 7) und des Füllblattes (8) aneinander, um den Datenabschnitt zu erzeugen.

5. Datenblatt (1) in einem Sicherheitsdokument, mit:
einem Datenabschnitt (3, 3', 3''), der einen Datenbereich (4) aufweist, in dem mindestens einige der Daten auf dem Datenblatt (1) unter Verwendung eines Laserbeschriftungsverfahrens aufgezeichnet werden können; und
einem flexiblen und biegesteifen Befestigungsabschnitt (2, 2") zum Befestigen des Datenblattes (1) am Sicherheitsdokument; wobei
der Datenabschnitt (3, 3', 3'') aus einem gleichmäßigen Teil gebildet wird, der aus einem Kunststoffmaterial mit einem Datenbereich (4) hergestellt wird, wobei der gleichmäßige Teil mindestens zwei Blätter aufweist, die am Datenbereich aneinander laminiert sind, wobei der Befestigungsabschnitt (2, 2') zwischen den mindestens zwei Blättern des Datenabschnitts von einem Ende des gleichmäßigen Teils in das Kunststoffmaterial hineinragt;
der Befestigungsabschnitt (2, 2') durch einen Abschnitt (10, 10''), der in das Kunststoffmaterial des Datenabschnitts hineinragt, am Datenabschnitt (3, 3', 3") befestigt ist; und
der in den Datenabschnitt (3, 3', 3") des Befestigungsabschnitts (2, 2'') hineinragende Abschnitt (10) sich nicht oder nur teilweise zum Datenbereich (4) des Datenabschnitts erstreckt, in dem die auf dem Datenblatt enthaltenen Daten aufgezeichnet sind.

6. Datenblatt nach Anspruch 5, **dadurch gekennzeichnet, dass** der in den Datenabschnitt (3, 3') des Befestigungsabschnitts (2) hineinragende Abschnitt (10) durch einen Klebstoff am Kunststoffmaterial des Datenabschnitts befestigt ist.

7. Datenblatt nach Anspruch 5 oder 6, **dadurch gekennzeichnet, dass**
sich Öffnungen (9) durch den in den Datenabschnitt (3'') des Befestigungsabschnitts (2'') hineinragenden Abschnitt erstrecken; und
das Kunststoffmaterial des Datenabschnitts (3'') sich durch die Öffnungen (9) erstreckt, um den Befestigungsabschnitt (2'') am Datenabschnitt (3'') zu befestigen.
